# EUROPEAN PATENT APPLICATION

(11) **EP 3 319 288 A1**
(43) Date of publication of application: **09.05.2018**
(21) Application number: 16197520.6
(22) Date of filing: 07.11.2016
(51) Int. Cl.: H04L 29/06, H04L 12/26, H04L 29/08

(54) **PROTOCOL DETECTION BY PARSING LAYER-4 PACKETS IN A NETWORK SECURITY SYSTEM**

(71) Applicant: Secucloud GmbH, 20354 Hamburg (DE)
(72) Inventor: Gonzales, Erick, 82131 Gauting (DE)
(74) Representative: Grünecker Patent- und Rechtsanwälte PartG mbB

(57) **Abstract**

A method of operating a network security system, a corresponding computer-readable storage medium and a network security system are provided to analyze an incoming data traffic and initiate at least one security measure based on the analysis. The received data traffic is analyzing to determine a communications protocol which the data traffic complies with. At least one security measure is selected based on the determined communications protocol, and the selected at least one security measure is initiated. Analyzing the received data traffic to determine the communications protocol comprises parsing layer-4 packets contained in the data traffic to detect predefined string patterns, and if a predefined string pattern has been detected, identifying the communications protocol from the detected string pattern.

## Description

### BACKGROUND OF THE INVENTION

### 1. Field of the Invention

The invention relates to network security systems that analyze an incoming data traffic and initiates security measures based on the analysis.

### 2. Description of the Related Art

Various network security techniques exist in the art that help protecting clients to prevent unauthorized access, misuse or modification of network resources such as client computers. Such network security techniques may be implemented on the computing resources that are to be protected, or at dedicated servers or gateways or elsewhere in the cloud. For instance, an internet service provider may wish to analyze the data traffic from or to its customers to detect malware or other security risks.

When analyzing data traffic in real-time, strong processing resources are required to avoid latencies due to the analysis. This becomes a huge problem where the data traffic is of very large bandwidth. For instance, an internet service provider wishing to analyze the data traffic of all of its customers has to deal with an incoming data volume that requires tremendous computing resources for analyzing the data.

Deep Packet Inspection (DPI) is a technique often used to examine the data packets and decide whether the packets may pass or should be routed to a different destination or otherwise blocked. DPI techniques often operate at layer 4 or below of the OSI model as this allows for accomplishing certain tasks in a relative simple manner. Other, more sophisticated DPI techniques operate at higher layers to detect communications protocols that are used at layer 7.

However, DPI techniques that identify communications protocols from incoming data traffic to apply content based routing often require a substantial time (up to 20 packets) to reliably detect a protocol, and this may lead to latencies which are unacceptable. Further, the algorithms to identify communications protocols are complex and require substantial processing resources which are expensive and cannot be allocated dynamically, leading to undesired bottleneck situations.

### SUMMARY OF THE INVENTION

An improved technique is provided which allows to analyze an incoming data traffic to initiate security measures, requiring less processing resources and reducing latencies.

As will be described in more detail below, layer-4 packets are parsed to detect predefined string patterns and identify a communications protocol from a detected string pattern. Thus, this technique operates at layer 4, *i.e.,* at the transport layer, and allows for detecting higher level protocols, e.g., layer-7 protocols, simply by matching string patterns within the layer-4 packets.

In an embodiment, there is provided a method of operating a network security system to analyze an incoming data traffic and initiate at least one security measure based on the analysis. The method comprises receiving a data traffic and analyzing the received data traffic to determine a communications protocol which the data traffic complies with. The method further comprises selecting at least one security measure based on the determined communications protocol, and initiating the selected at least one security measure. Analyzing the received data traffic to determine the communications protocol comprises parsing layer-4 packets contained in the data traffic to detect predefined string patterns, and if a predefined string pattern has been detected, identifying the communications protocol from the detected string pattern.

Analyzing the received data traffic to determine the communications protocol may comprise skipping a predetermined number of layer-4 packets at connection establishment before starting to parse the layer-4 packets. The data traffic's layer-4 protocol may be the Transmission Control Protocol, TCP, protocol and the predetermined number of layer-4 packets may be three.

In an embodiment, the communications protocol is the HTTP protocol and the parsing of the layer-4 packets contained in the data traffic comprises parsing the layer-4 packets to detect a text string indicating an HTTP request method. Alternatively, or additionally, the parsing of the layer-4 packets contained in the data traffic may comprise parsing the layer-4 packets to detect a text string indicating an HTTP version. In an embodiment, the step of parsing the layer-4 packets to detect a text string indicating the HTTP version is performed only if a text string indicating an HTTP request method has previously been detected during parsing.

In another embodiment which may be combined with the above embodiments, the communications protocol is the TLS protocol and the parsing of the layer-4 packets contained in the data traffic comprises parsing the layer-4 packets to detect a TLS handshake record. The parsing the layer-4 packets to detect a TLS handshake record may comprise parsing the layer-4 packets to determine if the binary data of the layer-4 packets is of a format matching the TLS handshake content type, a TLS version and the TLS ClientHello message type. The parsing of the layer-4 packets to determine if the binary data of the layer-4 packets is of a format matching the TLS handshake content type, a TLS version and the TLS ClientHello message type may comprise parsing the layer-4 packets to detect a code indicating the TLS handshake content type, and if this code has been detected, continuing to parse the layer-4 packets to determine if the binary data subsequent to said code is of a format matching a TLS version and the TLS ClientHello message type.

In any embodiment, parsing the layer-4 packets contained in the data traffic may comprise applying a regular expression filter to the data traffic. Alternatively or additionally, parsing the layer-4 packets contained in the data traffic may further comprise applying a plurality of different filters to the data traffic, where each filter for detecting predefined string patterns is specific to a different communications protocol.

In an embodiment, initiating the selected at least one security measure comprises redirecting the data traffic to a network security service that is arranged for providing the selected at least one security measure. The network security service may be provided by the network security system, or by an entity external to said network security system.

There is also provided a computer-readable storage medium that stores instructions that, when executed by one or more processors, cause the one or more processors to perform the method of any one of the methods described above or in the remainder of this disclosure.

Further, there is provided a network security system for analyzing an incoming data traffic and initiating at least one security measure based on the analysis. The network security system comprises an input unit for receiving a data traffic. The network security system further comprises a protocol determining unit for parsing layer-4 packets contained in a received data traffic to detect predefined string patterns, and if a predefined string pattern has been detected, to identify from the detected string pattern a communications protocol which the data traffic complies with. Moreover, the network security system comprises a security unit for selecting at least one security measure based on a determined communications protocol, and initiating the selected at least one security measure.

The network security system may be embodied to operate in accordance with any one of the methods described above or in the remainder of this disclosure.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram illustrating a network security system according to an embodiment of the invention;
FIG. 2 is a block diagram illustrating an optional protocol mapping table according to an embodiment of the invention;
FIG. 3 is a flow chart illustrating a process performed in accordance with an embodiment of the invention;
FIG. 4a is an excerpt of the layer-4 traffic used for detecting the HTTP protocol according to an embodiment; and
FIG. 4b is an excerpt of the layer-4 traffic used to detect the HTTPS protocol in accordance with an embodiment.

### DETAILED DESCRIPTION OF THE INVENTION

The illustrative embodiments of the present invention will be described with reference to the figure drawings wherein like elements and structures are indicated by like reference numbers.

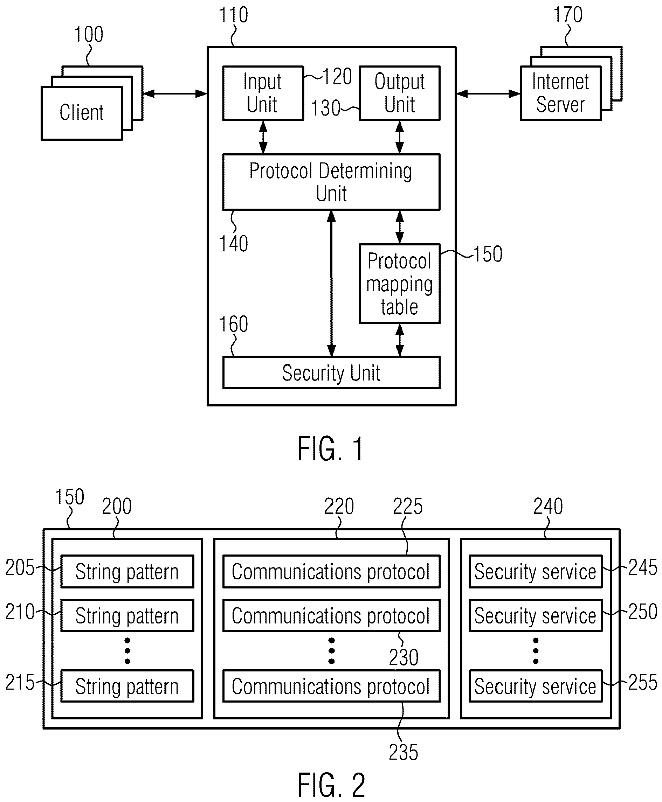

FIG. 1 is a block diagram illustrating a network security system 110 in accordance with an embodiment. The network security system 110 is connected to one or more clients 100 and to one or more internet servers 170. The internet servers 170 may be any servers that are part of the internet or connected to the internet to provide any services to one or more of the clients 100. In an embodiment, the network security system 110 may be a gateway server operated by an internet service provider, but in other embodiments, the network security system 110 may be implemented elsewhere, including at or within the clients 100 or the internet servers 170.

As may be seen from FIG. 1, the network security system 110 includes an input unit 120 that receives data traffic, and an output unit 130 that transmits data traffic if no security risk has been detected. The input unit 120 may be connected to receive the data traffic from one or more of the clients 100 or one or more of the internet servers 170. The output unit 130 may be connected to transmit the data traffic to one or more of the clients 100 or one or more of the internet servers 170.

As can be further seen from FIG. 1, the network security system 110 includes a protocol determining unit 140 that is connected to both the input unit 120 and the output unit 130. The protocol determining unit 140 analyzes the received data traffic and determines one or more communications protocols which the data traffic complies with. In an embodiment, the one or more communications protocols are layer-7 protocols.

The network security system 110 further includes a security unit 160 for selecting and initiating security measures. When the protocol determining unit 140 has parsed the layer-4 traffic to identify a communications protocol, the security unit 160 selects one or more security measures based on the determined communications protocol, and initiates the selected security measure. In an embodiment, initiating a security measure by means of the security unit 160 includes performing the security measure via the security unit 160 within the network security system 110. In another embodiment, initiating a security measure by means of the security unit 160 includes routing the data traffic to an entity external to the network security system 110 instead of transmitting the data traffic to the internet server 170. It is noted that the security unit 160 of the network security system 110 may be embodied to be able to initiate any possible kind of security measure in any possible way depending on the determined communications protocol. This includes performing a security measure within the security unit 160 for particular ones of communications protocols, and initiating the performance of a security measure by an external entity for other ones of the communications protocols.

As will be described in more detail below, the protocol determining unit 140 parses layer-4 packets contained in the received data traffic to detect predefined string patterns. If a predefined string pattern has been detected, the protocol determining unit 140 identifies from this detected string pattern a communications protocol which the data traffic complies with.

In an embodiment, the network security system 110 includes a protocol mapping table 150 to support the protocol determining unit 140 in determining the communications protocol, and the security unit 160 in initiating the respective security measure. It is however noted that a protocol mapping table 150 is included in the network security system 110 in an embodiment only. In other words, there are embodiments not requiring a protocol mapping table 150 to exist. In such embodiments, the protocol determining unit 140 and the security unit 160 may have the respective information coded directly within the respective algorithms performed by these units.

Taking the illustrative embodiment where the network security system 110 includes a protocol mapping table 150, this table may be embodied as shown in FIG. 2. As apparent from this figure, the protocol mapping table 150 includes a string pattern store 200 that stores a plurality of string patterns 205, 210, 215. The protocol mapping table 150 further includes a protocol store 220 that stores a plurality of data indicating communications protocols 225, 230, 235. Moreover, the protocol mapping table 150 includes a security measure store 240 that stores information identifying a plurality of security measures or services 245, 250, 255. In the embodiment of FIG. 2, each string pattern is associated to a communications protocol, and each communications protocol is associated to a security service. For instance, string pattern 205 is associated to communications protocol 225 which is associated to the security service 245. When the protocol determining unit 140 determines the string pattern 205 to be present in a layer-4 packet of the incoming data traffic, then the protocol determining unit 140 may use the protocol mapping table 150 to determine that the incoming data traffic complies with the communications protocol 225. This information may then be used by the security unit 160 to determine that the security service 245 should be initiated as a security measure.

As mentioned above, the protocol mapping table 150 shown in FIG. 2 is not present in all embodiments and has been presented for illustrative reasons. If it is present, it may be implemented as a separate component as shown in FIG. 1, but in other embodiments, the protocol mapping table 150 may be comprised within one or more of the protocol determining unit 140 and the security unit 160.

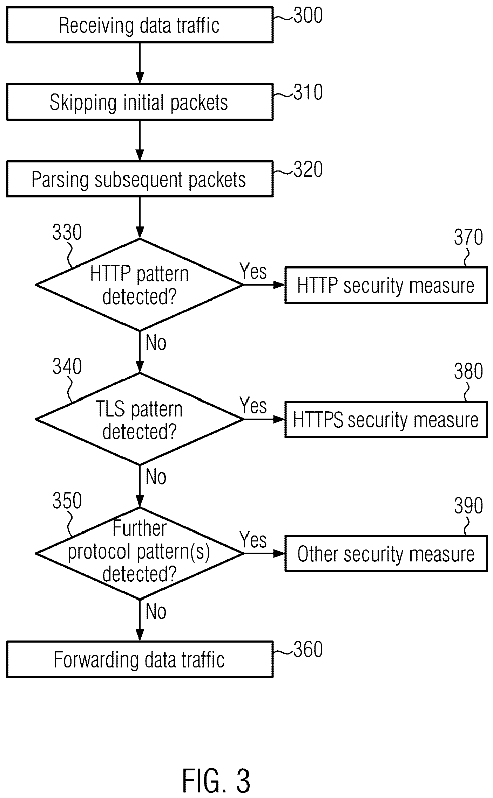

Referring now to FIG. 3, a flow chart is depicted for illustrating an exemplary process performed by the network security system 110 in accordance with an embodiment of the invention.

In step 300, data traffic is received from one or more of the clients 100 and/or one or more of the internet servers 170, by means of the input unit 120. This data traffic is then forwarded to the protocol determining unit 140 to determine one or more communications protocols which the data traffic complies with.

In step 310, a predetermined number of layer-4 packets are skipped at connection establishment. For instance, if the data traffic's layer-4 protocol is TCP (Transmission Control Protocol), then the predetermined number of layer-4 packets to be skipped is three. This is because to establish a connection, TCP uses a three-way handshake that includes a SYN packet, a SYN-ACK packet, and an ACK packet. If another layer-4 protocol is used, the predetermined number of layer-4 packets skipped in step 310 may be different from three.

Once the initial packets have been skipped in step 310, the process continues to start parsing the layer-4 packets in step 320 to determine a communications protocol which the data traffic complies with. As mentioned above, this communications protocol may be any protocol above layer 4, and it may in particular be a layer-7 protocol.

Taking the example discussed above where the layer-4 protocol is TCP, the parsing process in step 320 starts with the fourth layer-4 packet in the data traffic after establishing the connection. This is a very early point of time for detecting a communications protocol, when compared with conventional techniques. Thus, since the identification of the communications protocol may be achieved in the fourth layer-4 packet, the latency is drastically reduced and much less processing resources are required.

Continuing with FIG. 3, if the parsing step 320 reveals that an HTTP pattern has been detected, then the process branches off in step 330 to initiate an HTTP security measure in step 370. If the parsing 320 leads to a TLS (Transport Layer Security) pattern being detected in step 330, an HTTPS security measure is initiated in step 380. An arbitrary number of further protocols may be detected in the same way, *i.e.,* when the respective protocol pattern is detected, the process branches off to a suitable security measure, as illustrated in steps 350, 390.

While FIG. 3 illustrates steps 330, 340, 350 to be performed sequentially, it is noted that the order may be different in other embodiments. The string detection for various communications protocols may even be performed in parallel so that steps 330, 340, 350 may be performed simultaneously. For this purpose, the protocol determining unit 140 may include multiple parsing engines, each for a subset of one or more of the possible communications protocols, and all of these parsing engines may operate in parallel.

Although FIG. 3 suggests that at most one security measure is initiated, it is noted that embodiments exist where multiple communications protocols are detected in one and the same data traffic. If multiple communications protocols are detected, then there is an embodiment where respective security measures of all of the detected communications protocols are initiated sequentially or simultaneously. It is noted however, that other embodiments exist where only one or a subset of the detected communications protocols lead to respective security measures being initiated.

Any of the security measures 370, 380, 390 may lead to the data traffic being blocked or routed to other internal or external entities. Of course, if the security measures determine that there is no security risk, the data traffic is forwarded to the output unit 130 to make its way to the desired destination.

As shown in FIG. 3, if the parsing 320 did not lead to any string pattern being detected, *i.e.,* if it was not possible to identify any known communications protocols, then the data traffic is forwarded to the respective desired destination by means of the output unit 130 in step 360. In another embodiment, if no communications protocol could be detected, the data traffic is blocked.

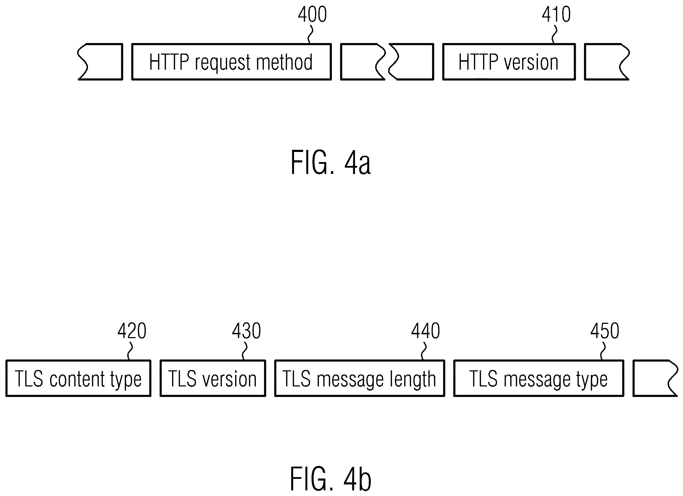

As mentioned above, one of the embodiments is to detect the HTTP protocol in steps 320, 330. This will now be described in more detail with reference to FIG. 4a.

After having skipped three TCP packets, the protocol determining unit 140 parses the fourth layer-4 packet to determine a string pattern that is specific to the HTTP protocol. In an embodiment, the protocol determining unit 140 parses the layer-4 traffic to detect one of the strings that identify an HTTP request method 400, *i.e.,* one of "GET", "POST", "PUT", "DELETE", "OPTIONS", "HEAD", "TRACE", "CONNECT", and "PATCH". If one of the method strings has been detected, the remainder of the layer-4 traffic is parsed to detect a string indicating the HTTP version 110, *i.e.,* one of the strings "HTTP/1.1", "HTTP/1.0", and "HTTP/2.0".

A pseudo code showing how this may be implemented may be as follows:

```
 match_fn (<<"GET ", _/binary» = Data) ->
     match_HTTP(Data);
 match_fn(<<POST ", _/binary>> = Data) ->
     match_HTTP(Data);
 match_fn(<<"PUT ", _/binary» = Data) ->
     match_HTTP(Data);
 match_fn(<<"DELETE ", _/binary>> = Data) ->
     match_HTTP(Data);
 match_fn(<<"OPTIONS ", _/binary>> = Data) ->
     match_HTTP(Data);
 match_fn(<<"HEAD ", _/binary>> = Data) ->
     match_HTTP(Data);
 match_fn(<<"TRACE ", _/binary>> = Data) ->
     match_HTTP(Data);
 match_fn(<<"CONNECT ", _/binary>> = Data) ->
     match_HTTP(Data);
 match_fn(<<"PATCH ", _/binary>> = Data) ->
     match_HTTP(Data);
 match_HTTP(Data) ->
     case binary:split(Data, <<"\r\n">>) of
          [RequestLine, Rest] ->
               case binary:split(RequestLine, «" "», [global]) of
                    [] ->
                        needs_more;
                    [_, _] ->
                        needs_more;
                    [_, _, <<"HTTPS/1.1">>] = Parsed ->
                        { ok, 'HTTP_1.1', HTTP_mitm, bounce, {Parsed, Rest}};
                    [_, _, <<"HTTPS/1.0">>] = Parsed ->
                        { ok, 'HTTP_1.0', HTTP_mitm, bounce, {Parsed, Rest}};
                    [_, _, <<"HTTP/2.0">>] = Parsed->
                        { ok, 'HTTP_2.0', HTTP_mitm, bounce, {Parsed, Rest}};
                   _ ->
                        match_fn(not_HTTP, Data)
               end;
          [_] ->
               needs_more
     End.
```

Turning now to the embodiment of detecting the HTTPS protocol in step 340, reference is made to FIG. 4b. This embodiment again assumes that three TCP packets have been skipped in step 310.

To detect the HTTPS protocol, the protocol determining unit 140 may first parse the layer-4 data traffic to determine the TLS content type 420. If the first byte has the value of 22, then this could indicate that the respective layer-4 packet is a TLS record of the handshake type. If this is the case, then the TLS specification requires the two subsequent bytes to indicate the TLS major and minor versions 430. After that, the two subsequent bytes would include the TLS message length 440 followed by a byte indicating the TLS message type 450. If the TLS message type 450 has the value of 1, then the TLS message is a ClientHello message which is the first message in the negotiation phase of the TLS handshake. Thus, the HTTPS protocol can be very efficiently detected in accordance with an embodiment by parsing the layer-4 traffic starting at the fourth packet to determine if the first byte has the value of 22, the second byte has the value of 3 (which is the possible major version), the third byte has a value of 0, 1, 2 or 3 (which are the possible minor versions), and the sixth byte has a value of 1.

Again, the following pseudo code illustrates how this parsing process may be performed:

```
 -define(TLS_RECORD_HDR_SIZE, 5).
 -define(TLS_HANDSHAKE_PROTOCOL, 22).
 -define(SSL_CLIENT_HELLO, 1).
 match_fn(<<?TLS_HANDSHAKE_PROTOCOL, Rest/binary>> = Incoming) ->
     if size(Rest) < ?TLS_RECORD_HDR_SIZE - 1 ->
               needs_more;
         true ->
               match_tls(Incoming)
     end;
 match_tls(<<?TLS_HANDSHAKE_PROTOCOL, 3, 3, LH, LL, ?SSL_CLIENT_HELLO,
 Rest/binary>>) ->
     {ok, 'tls_1.2', tls_mitm, bounce, {{?SSL_CLIENT_HELLO, LH, LL}, Rest}};
 match_tls(<<?TLS_HANDSHAKE_PROTOCOL, 3, 2, LH, LL, ?SSL_CLIENT_HELLO,
 Rest/binary>>) ->
     {ok, 'tls_1.1', tls_mitm, bounce, {{?SSL_CLIENT_HELLO, LH, LL}, Rest}};
 match_tls(<<?TLS_HANDSHAKE_PROTOCOL, 3, 1, LH, LL, ?SSL_CLIENT_HELLO,
 Rest/binary>>) ->
     {ok, 'tls_1.0', tls_mitm, bounce, {{?SSL_CLIENT_HELLO, LH, LL}, Rest}};
 match_tls(<<?TLS_HANDSHAKE_PROTOCOL, 3, 0, LH, LL, ?SSL_CLIENT_HELLO,
 Rest/binary>>) ->
     {ok, 'ssl_3.0', tls_mitm, bounce, {{?SSL_CLIENT_HELLO, LH, LL}, Rest}};
 match_tls(Incoming) ->
     match_fn(not_tls, Incoming).
```

The above-examples (HTTP, HTTPS) have been shown to each have a two-step pattern process. For HTTP, the first step is to detect a request method, and the second step is to request an HTTP version. For HTTPS, the first step is to detect the handshake content type, and the second step is to check for the remaining part of the pattern. While this two-step process is particularly advantageous because processing resources for the second step are required only if the first step succeeds, it is noted that other embodiments perform the string matching in a single step. It is also possible that the parsing is performed in a single step for a first subset of one or more communications protocols, and in two or more steps for a second subset of one or more communications protocols.

The same processes and principles discussed above for HTTP and HTTPS may be used for any other communications protocol as well. This allows for expanding the protocol determining unit 140 to be able to deal with arbitrary numbers and types of communications protocols in substantially the same way. This may be done by using a code similar to the above. Alternatively, if a protocol mapping table 150 is used, then the code to map the string pattern may be generic to all communications protocols and may receive the necessary string pattern information from the protocol mapping table 150.

In any of the above embodiments, the parsing of the layer-4 packets may make use of any parsing or string matching technique. This may in particular include binary string search techniques and regular expression filtering which may be applied most efficiently.

As apparent from the discussed embodiments, a string pattern may preferably include two or more substrings such as "GET" and "HTTP/1.1" in an HTTP example, or "22", "3", "3", "1" in an HTTPS example. Any string patterns, strings or substrings may be text strings or binary, or a combination thereof.

As will be appreciated from the description of the various embodiments above, a technique is provided that allows for enhancing network security systems by enabling a fast detection of communications protocols without requiring extensive processing resources. Moreover, the embodiments are easy to implement, and extendable to arbitrary further protocols. Thus, the embodiments not only bring substantial advantages at the client side, e.g., to customers of internet service providers, but also at the side of the network security system itself, due to its simplified administration.

While the invention has been described with respect to the physical embodiments constructed in accordance herewith, it will be apparent to those skilled in the art that various modification, variation and improvements of the present invention may be made in the light of the above teachings and within the purview of the appended claims without departing from the spirit and intended scope of the invention. Accordingly, it is to be understood that the invention is not limited by the specific illustrative embodiments, but only by the scope of the appended claims.

## Claims

1. A method of operating a network security system to analyze an incoming data traffic and initiate at least one security measure based on the analysis, the method comprising:
receiving (300) a data traffic;
analyzing (320) the received data traffic to determine a communications protocol which the data traffic complies with;
selecting (330-350) at least one security measure based on the determined communications protocol; and
initiating (370-390) the selected at least one security measure,
wherein analyzing the received data traffic to determine the communications protocol comprises:
parsing layer-4 packets contained in the data traffic to detect predefined string patterns; and
if a predefined string pattern has been detected, identifying the communications protocol from the detected string pattern.

2. The method of claim 1, wherein analyzing the received data traffic to determine the communications protocol comprises:
skipping (310) a predetermined number of layer-4 packets at connection establishment before starting to parse the layer-4 packets.

3. The method of claim 2, wherein the data traffic's layer-4 protocol is the Transmission Control Protocol, TCP, protocol and the predetermined number of layer-4 packets is three.

4. The method of one of claims 1 to 3, wherein the communications protocol is the Hypertext Transfer Protocol, HTTP, protocol and the parsing of the layer-4 packets contained in the data traffic comprises:
parsing the layer-4 packets to detect a text string (400) indicating an HTTP request method.

5. The method of one of claims 1 to 4, wherein the communications protocol is the Hypertext Transfer Protocol, HTTP, protocol and the parsing of the layer-4 packets contained in the data traffic comprises:
parsing the layer-4 packets to detect a text string (410) indicating an HTTP version.

6. The method of claim 5, wherein the step of parsing the layer-4 packets to detect a text string indicating the HTTP version is performed only if a text string indicating an HTTP request method has previously been detected during parsing.

7. The method of one of claims 1 to 6, wherein the communications protocol is the Transport Layer Security, TLS, protocol and the parsing of the layer-4 packets contained in the data traffic comprises:
parsing the layer-4 packets to detect a TLS handshake record.

8. The method of claim 7, wherein parsing the layer-4 packets to detect a TLS handshake record comprises:
parsing the layer-4 packets to determine if the binary data of the layer-4 packets is of a format matching the TLS handshake content type (420), a TLS version (430) and the TLS ClientHello message type (450).

9. The method of claim 8, wherein parsing the layer-4 packets to determine if the binary data of the layer-4 packets is of a format matching the TLS handshake content type, a TLS version and the TLS ClientHello message type comprises:
parsing the layer-4 packets to detect a code indicating the TLS handshake content type; and
if said code has been detected, continuing to parse the layer-4 packets to determine if the binary data subsequent to said code is of a format matching a TLS version and the TLS ClientHello message type.

10. The method of one of claims 1 to 9, wherein parsing the layer-4 packets contained in the data traffic comprises applying a regular expression filter to the data traffic.

11. The method of one of claims 1 to 10, wherein parsing the layer-4 packets contained in the data traffic comprises:
applying a plurality of different filters to the data traffic, each filter for detecting predefined string patterns being specific to a different one of multiple communications protocols.

12. The method of one of claims 1 to 11, wherein initiating the selected at least one security measure comprises:
redirecting the data traffic to a network security service that is arranged for providing the selected at least one security measure.

13. The method of claim 12, wherein said network security service is one of a network security service provided by said network security system, and a network security service provided by an entity external to said network security system.

14. A computer-readable storage medium storing instructions that, when executed by one or more processors, cause said one or more processors to perform the method of one of claims 1 to 13.

15. A network security system for analyzing an incoming data traffic and initiating at least one security measure based on the analysis, comprising:
an input unit (120) for receiving a data traffic;
a protocol determining unit (140) for parsing layer-4 packets contained in a received data traffic to detect predefined string patterns, and if a predefined string pattern has been detected, to identify from the detected string pattern a communications protocol which the data traffic complies with; and
a security unit (160) for selecting at least one security measure based on a determined communications protocol, and initiating the selected at least one security measure.
